# EUROPEAN PATENT SPECIFICATION

(11) **EP 4 120 757 B1**
(45) Date of publication and mention of the grant of the patent: **04.06.2025**
(21) Application number: 21785371.2
(22) Date of filing: 12.04.2021
(51) Int. Cl.: H04W 72/02, H04W 4/40, H04W 92/18, H04L 1/08, H04L 1/00, H04L 1/1867, H04L 1/1812, H04W 72/23

(54) **METHOD AND APPARATUS FOR SELECTING TRANSMISSION RESOURCE IN NR V2X**
VERFAHREN UND VORRICHTUNG ZUR AUSWAHL EINER ÜBERTRAGUNGSRESSOURCE IN NR V2X
PROCÉDÉ ET APPAREIL DE SÉLECTION DE RESSOURCE DE TRANSMISSION DANS NR V2X

(30) Priority: 11.04.2020 US 202063008658 P
(43) Date of publication of application: 18.01.2023
(73) Proprietor: LG Electronics, Inc., Yeongdeungpo-gu Seoul 07336 (KR)
(72) Inventor: LEE, Seungmin, Seoul 06772 (KR)
(74) Representative: Plasseraud IP
(86) International application number: PCT/KR2021/004582
(87) International publication number: WO 2021/206531

(56) References cited:
- WO-A1-2020/024208
- WO-A1-2020/029787
- KR-A- 20190 007 066
- NTT DOCOMO ET AL: "Remaining issues on resource allocation mechanism mode 2", vol. RAN WG1, no. e-Meeting; 20200420 - 20200430, 10 April 2020 (2020-04-10), XP052342517, Retrieved from the Internet <URL:https://ftp.3gpp.org/tsg_ran/WG1_RL1/TSGR1_100b_e/Docs/R1-2002439.zip R1-2002439_DCM_SL RA mode 2_fin.docx> [retrieved on 20200410]
- ERICSSON: "Resource allocation Mode 2 for NR SL", vol. RAN WG1, no. e-Meeting; 20200420 - 20200430, 10 April 2020 (2020-04-10), XP051873494, Retrieved from the Internet <URL:https://ftp.3gpp.org/tsg_ran/WG1_RL1/TSGR1_100b_e/Docs/R1-2002234.zip R1-2002234 Ericsson - Resource allocation Mode 2 for NR SL.docx> [retrieved on 20200410]
- ROBERT BOSCH GMBH: "Remaining issues for Mode 2 resource (re-)selection of periodic transmission", vol. RAN WG1, no. Athens, Greece; 20200224 - 20200228, 15 February 2020 (2020-02-15), XP052344153, Retrieved from the Internet <URL:https://ftp.3gpp.org/tsg_ran/WG1_RL1/TSGR1_100_e/Docs/R1-2001090.zip R1-2001090 Bosch_Remaining_Issues_in_Mode2_RA.docx> [retrieved on 20200215]
- SAMSUNG: "On Mode 2 for NR Sidelink", 3GPP DRAFT; R1-2000617, vol. RAN WG1, 14 February 2020 (2020-02-14), pages 1 - 8, XP051852961
- PANASONIC: "Remaining Issues on Sidelink Mode 2 Resource Allocation", 3GPP DRAFT; R1-2000542, vol. RAN WG1, 14 February 2020 (2020-02-14), pages 1 - 7, XP051852903
- MEDIATEK INC: "On sidelink mode-2 resource allocation", 3GPP DRAFT; R1-1912106, vol. RAN WG1, 9 November 2019 (2019-11-09), Reno, USA, pages 1 - 13, XP051823199
- FUJITSU: "Remaining issues on mode 1 resource allocation for NR V2X", 3GPP DRAFT; R1-2000546, vol. RAN WG1, 14 February 2020 (2020-02-14), pages 1 - 6, XP051852907

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PCS interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

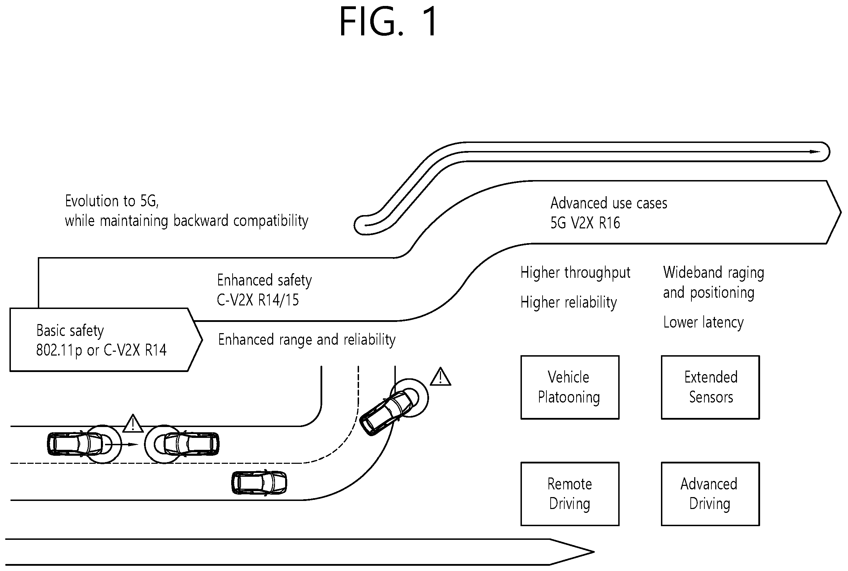

FIG. 1 is a drawing for describing V2X communication based on NR, compared to V2X communication based on RAT used before NR. The embodiment of FIG. 1 may be combined with various embodiments of the present disclosure.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

Thereafter, regarding V2X communication, various V2X scenarios are proposed in NR. For example, the various V2X scenarios may include vehicle platooning, advanced driving, extended sensors, remote driving, or the like. Document: NTT DOCOMO ET AL, "Remaining issues on resource allocation mechanism mode 2", vol. RAN WG1, no. e-Meeting; 20200420 - 20200430, (20200410), 3GPP DRAFT; R1-2002439, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: https://ftp.3gpp.org/tsg_ran/WG1_RL1/TSGR1_100b_e/Docs/R1-2002439.zip R1-2002439_DCM_SL RA mode 2_fin.docx, (20200410), relates to resource allocation in 3GPP. Document: ERICSSON, "Resource allocation Mode 2 for NR SL", vol. RAN WG1, no. e-Meeting; 20200420 - 20200430, (20200410), 3GPP DRAFT; R1-2002234, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: https://ftp.3gpp.org/tsg_ran/WG1_RL1/TSGR1_100b_e/Docs/R1-2002234.zip R1-2002234 Ericsson - Resource allocation Mode 2 for NR SL.docx, (20200410), also relates to resource allocation in 3GPP.

### SUMMARY

Meanwhile, when the UE performs the re-evaluation operation for a transmission resource, a pre-determined time limit (e.g., a time gap between transmission resources that can be signaled by one SCI) may not be maintained for a transmission resource determined before the UE signals SCI, due to a transmission resource (RSC_REV) in which reselection is triggered/performed.

In one aspect, provided is a method according to claim 1. For example, the second transmission resource may be a resource not reserved by the first device.

In one aspect, provided is a first device according to claim 9. A further aspect provides a non-transitory computer-readable storage medium according to claim 11.

The UE can efficiently perform SL communication.

### BRIEF DESCRIPTION OF THE DRAWINGS

FIG. 1 is a drawing for describing V2X communication based on NR, compared to V2X communication based on RAT used before NR.
FIG. 2 shows a structure of an NR system, based on an embodiment of the present disclosure.
FIG. 3 shows a radio protocol architecture, based on an embodiment of the present disclosure.
FIG. 4 shows a structure of a radio frame of an NR, based on an embodiment of the present disclosure.
FIG. 5 shows a structure of a slot of an NR frame, based on an embodiment of the present disclosure.
FIG. 6 shows an example of a BWP, based on an embodiment of the present disclosure.
FIG. 7 shows a UE performing V2X or SL communication, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows a method in which a UE that has reserved transmission resource(s) informs another UE of the transmission resource(s), based on an embodiment of the present disclosure.
FIG. 11 shows a procedure in which a transmitting UE reselects a resource based on re-evaluation of the resource and performs sidelink communication with a receiving UE, based on an embodiment of the present disclosure.
FIG. 12 shows an example of reselecting a resource based on a re-evaluated resource, based on an embodiment of the present disclosure.
FIG. 13 shows an example of re-selecting a periodic resource based on a re-evaluated periodic resource, based on an embodiment of the present disclosure.
FIG. 14 shows a method for a first device to perform resource reselection based on re-evaluation of a first transmission resource, based on an embodiment of the present disclosure.
FIG. 15 shows a method for a second device to perform sidelink communication with a first device, based on an embodiment of the present disclosure.
FIG. 16 shows a communication system 1, based on an embodiment of the present disclosure.
FIG. 17 shows wireless devices, based on an embodiment of the present disclosure.
FIG. 18 shows a signal process circuit for a transmission signal, based on an embodiment of the present disclosure.
FIG. 19 shows another example of a wireless device, based on an embodiment of the present disclosure.
FIG. 20 shows a hand-held device, based on an embodiment of the present disclosure.
FIG. 21 shows a vehicle or an autonomous vehicle, based on an embodiment of the present disclosure.

### DETAILED DESCRIPTION

In the present specification, "A or B" may mean "only A", "only B" or "both A and B." In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

A technical feature described individually in one figure in the present specification may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

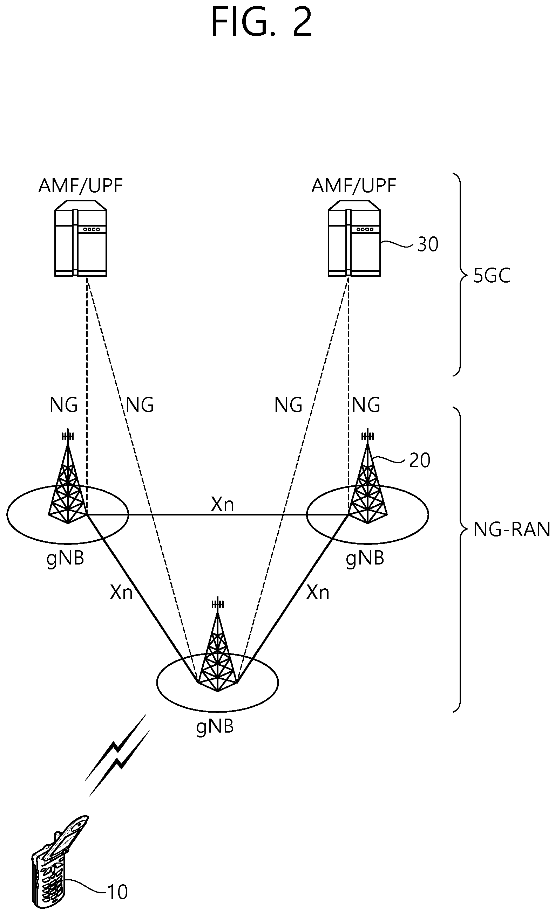

FIG. 2 shows a structure of an NR system, based on an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

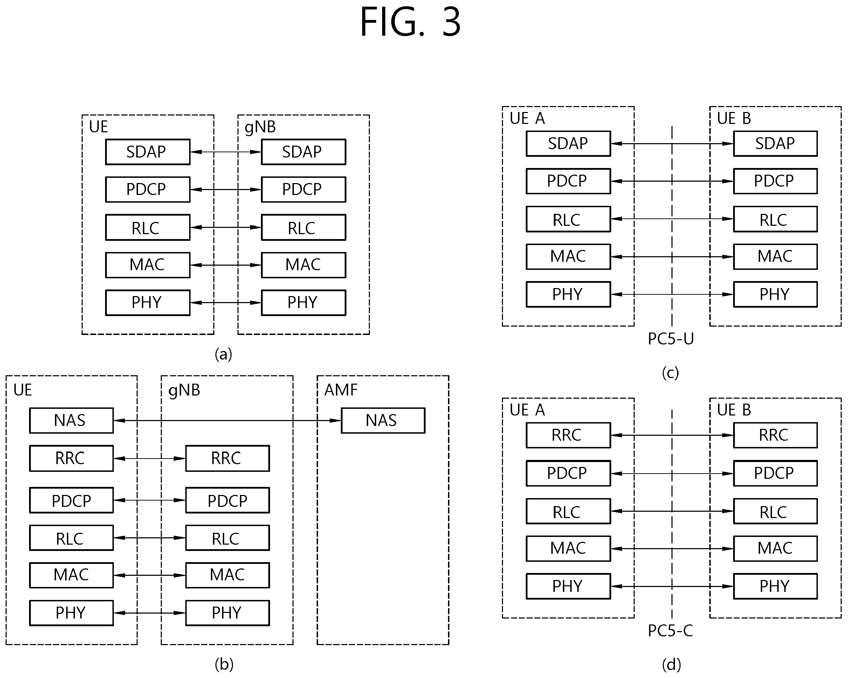

FIG. 3 shows a radio protocol architecture, based on an embodiment of the present disclosure. The embodiment of FIG. 3 may be combined with various embodiments of the present disclosure. Specifically, (a) of FIG. 3 shows a radio protocol stack of a user plane for Uu communication, and (b) of FIG. 3 shows a radio protocol stack of a control plane for Uu communication. (c) of FIG. 3 shows a radio protocol stack of a user plane for SL communication, and (d) of FIG. 3 shows a radio protocol stack of a control plane for SL communication.

Referring to FIG. 3, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

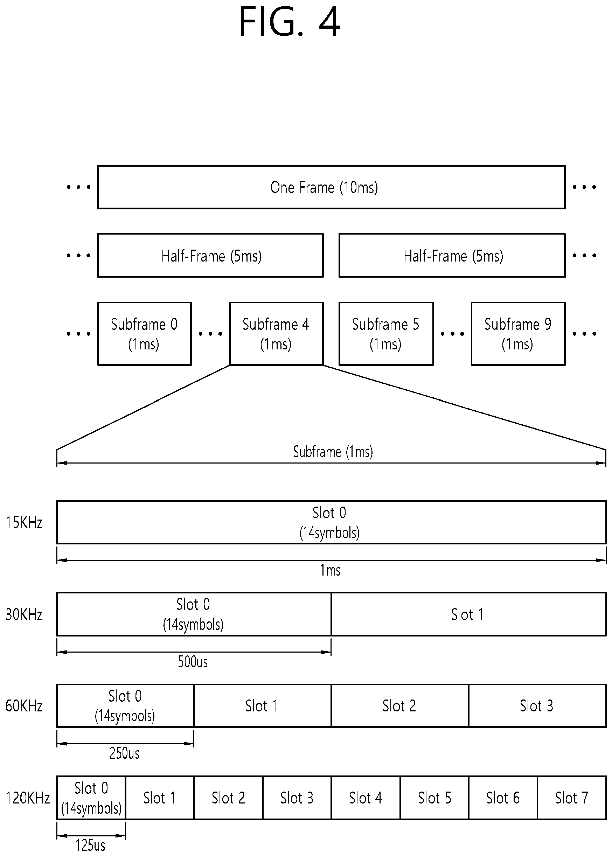

FIG. 4 shows a structure of a radio frame of an NR, based on an embodiment of the present disclosure. The embodiment of FIG. 4 may be combined with various embodiments of the present disclosure.

Referring to FIG. 4, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u} ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

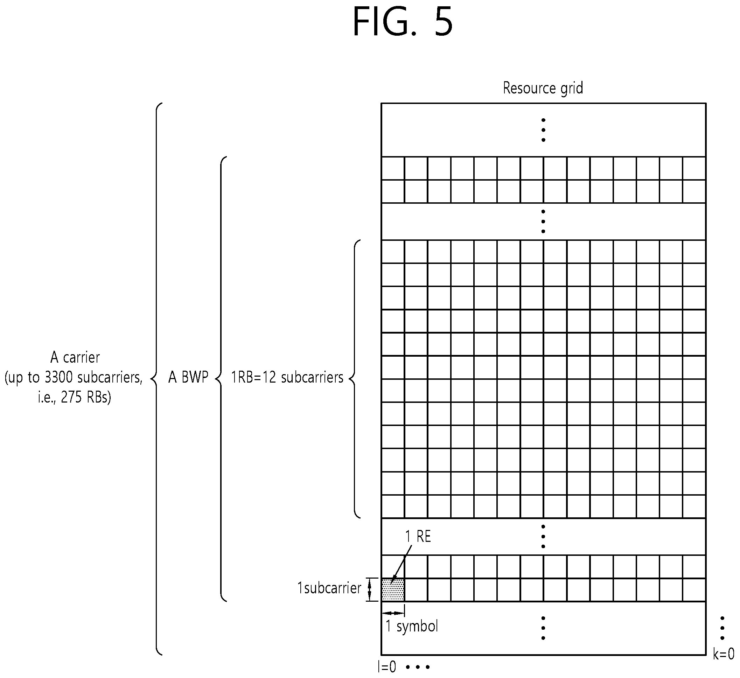

FIG. 5 shows a structure of a slot of an NR frame, based on an embodiment of the present disclosure. The embodiment of FIG. 5 may be combined with various embodiments of the present disclosure.

Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

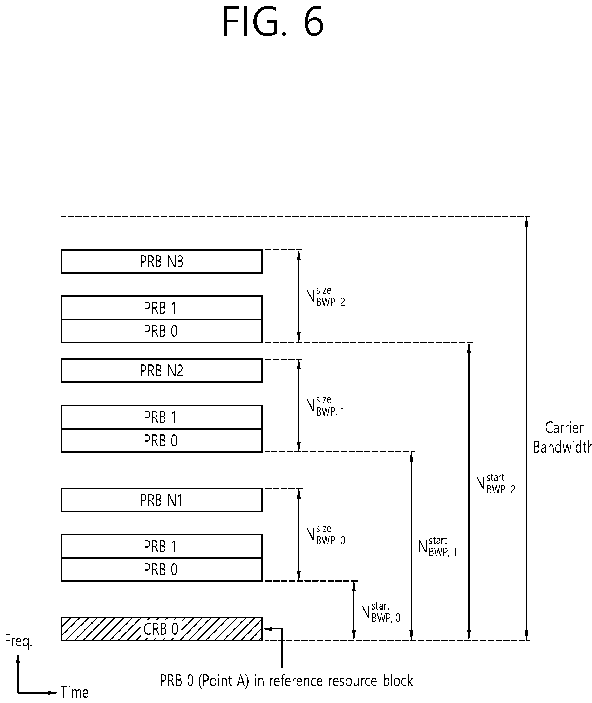

FIG. 6 shows an example of a BWP, based on an embodiment of the present disclosure. The embodiment of FIG. 6 may be combined with various embodiments of the present disclosure. It is assumed in the embodiment of FIG. 6 that the number of BWPs is 3.

Referring to FIG. 6, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

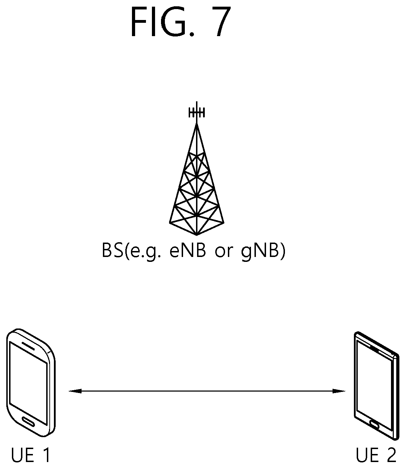

FIG. 7 shows a UE performing V2X or SL communication, based on an embodiment of the present disclosure. The embodiment of FIG. 7 may be combined with various embodiments of the present disclosure.

Referring to FIG. 7, in V2X or SL communication, the term 'UE' may generally imply a UE of a user. However, if a network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Hereinafter, resource allocation in SL will be described.

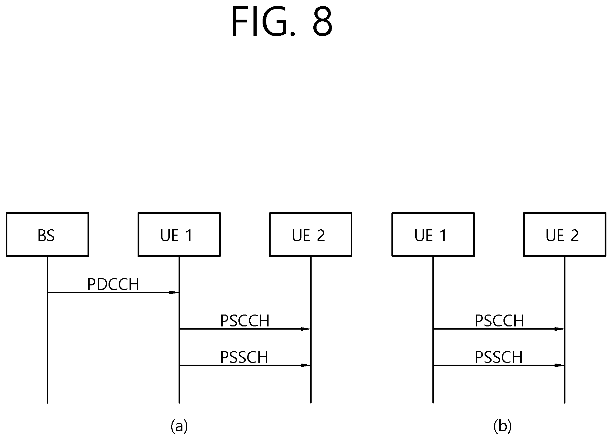

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a BS may schedule an SL resource to be used by the UE for SL transmission. For example, the BS may perform resource scheduling to a UE 1 through a PDCCH (e.g., downlink control information (DCI)) or RRC signaling (e.g., Configured Grant Type 1 or Configured Grant Type 2), and the UE 1 may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

Referring to (b) of FIG. 8, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. In addition, the UE 1 which has autonomously selected the resource within the resource pool may transmit the SCI to the UE 2 through a PSCCH, and thereafter may transmit data based on the SCI to the UE 2 through a PSSCH.

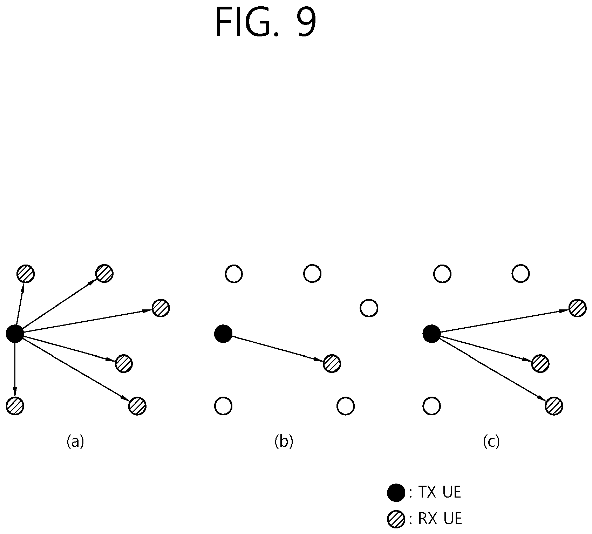

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in the present disclosure, for example, a transmitting UE (TX UE) may be a UE which transmits data to a (target) receiving UE (RX UE). For example, the TX UE may be a UE which performs PSCCH transmission and/or PSSCH transmission. Additionally/alternatively, for example, the TX UE may be a UE which transmits SL CSI-RS(s) and/or a SL CSI report request indicator to the (target) RX UE. Additionally/alternatively, for example, the TX UE may be a UE which transmits a (control) channel (e.g., PSCCH, PSSCH, etc.) and/or reference signal(s) on the (control) channel (e.g., DM-RS, CSI-RS, etc.), to be used for a SL radio link monitoring (RLM) operation and/or a SL radio link failure (RLF) operation of the (target) RX UE.

Meanwhile, in the present disclosure, for example, a receiving UE (RX UE) may be a UE which transmits SL HARQ feedback to a transmitting UE (TX UE) based on whether decoding of data received from the TX UE is successful and/or whether detection/decoding of a PSCCH (related to PSSCH scheduling) transmitted by the TX UE is successful. Additionally/alternatively, for example, the RX UE may be a UE which performs SL CSI transmission to the TX UE based on SL CSI-RS(s) and/or a SL CSI report request indicator received from the TX UE. Additionally/alternatively, for example, the RX UE is a UE which transmits a SL (L1) reference signal received power (RSRP) measurement value, to the TX UE, measured based on (pre-defined) reference signal(s) and/or a SL (L1) RSRP report request indicator received from the TX UE. Additionally/alternatively, for example, the RX UE may be a UE which transmits data of the RX UE to the TX UE. Additionally/alternatively, for example, the RX UE may be a UE which performs a SL RLM operation and/or a SL RLF operation based on a (pre-configured) (control) channel and/or reference signal(s) on the (control) channel received from the TX UE.

Meanwhile, in the present disclosure, for example, in case the RX UE transmits SL HARQ feedback information for a PSSCH and/or a PSCCH received from the TX UE, the following options or some of the following options may be considered. Herein, for example, the following options or some of the following options may be limitedly applied only if the RX UE successfully decodes/detects a PSCCH scheduling a PSSCH.
(1) groupcast option 1: no acknowledgement (NACK) information may be transmitted to the TX UE only if the RX UE fails to decode/receive the PSSCH received from the TX UE.
(2) groupcast option 2: If the RX UE succeeds in decoding/receiving the PSSCH received from the TX UE, ACK information may be transmitted to the TX UE, and if the RX UE fails to decode/receive the PSSCH, NACK information may be transmitted to the TX UE.

Meanwhile, in the present disclosure, for example, the TX UE may transmit the following information or some of the following information to the RX UE through SCI(s). Herein, for example, the TX UE may transmit some or all of the following information to the RX UE through a first SCI and/or a second SCI.
- PSSCH (and/or PSCCH) related resource allocation information (e.g., the location/number of time/frequency resources, resource reservation information (e.g., period))
- SL CSI report request indicator or SL (L1) reference signal received power (RSRP) (and/or SL (L1) reference signal received quality (RSRQ) and/or SL (L1) reference signal strength indicator (RSSI)) report request indicator
- SL CSI transmission indicator (or SL (L1) RSRP (and/or SL (L1) RSRQ and/or SL (L1) RSSI) information transmission indicator) (on a PSSCH)
- Modulation and Coding Scheme (MCS) information
- TX power information
- L1 destination ID information and/or L1 source ID information
- SL HARQ process ID information
- New Data Indicator (NDI) information
- Redundancy Version (RV) information
- (Transmission traffic/packet related) QoS information (e.g., priority information)
- SL CSI-RS transmission indicator or information on the number of antenna ports for (transmitting) SL CSI-RS
- TX UE location information or location (or distance range) information of the target RX UE (for which SL HARQ feedback is requested)
- Reference signal (e.g., DM-RS, etc.) information related to decoding (and/or channel estimation) of data transmitted through a PSSCH. For example, information related to a pattern of (time-frequency) mapping resources of DM-RS(s), RANK information, antenna port index information, information on the number of antenna ports, etc.

Meanwhile, in the present disclosure, for example, since the TX UE may transmit a SCI, a first SCI and/or a second SCI to the RX UE through a PSCCH, the PSCCH may be replaced/substituted with the SCI and/or the first SCI and/or the second SCI. Additionally/alternatively, the SCI may be replaced/substituted with the PSCCH and/or the first SCI and/or the second SCI. Additionally/alternatively, for example, since the TX UE may transmit a second SCI to the RX UE through a PSSCH, the PSSCH may be replaced/substituted with the second SCI.

Meanwhile, in the present disclosure, for example, if SCI configuration fields are divided into two groups in consideration of a (relatively) high SCI payload size, the first SCI including a first SCI configuration field group may be referred to as a 1^{st} SCI, and the second SCI including a second SCI configuration field group may be referred to as a 2^{nd} SCI. Also, for example, the 1^{st} SCI may be transmitted to the receiving UE through a PSCCH. Also, for example, the 2^{nd} SCI may be transmitted to the receiving UE through a (independent) PSCCH or may be piggybacked and transmitted together with data through a PSSCH.

Meanwhile, in the present disclosure, for example, the term "configure/configured" or the term "define/defined" may refer to (pre)configuration from a base station or a network (through pre-defined signaling (e.g., SIB, MAC, RRC, etc.)) (for each resource pool).

Meanwhile, in the present disclosure, for example, since an RLF may be determined based on out-of-synch (OOS) indicator(s) or in-synch (IS) indicator(s), the RLF may be replaced/substituted with out-of-synch (OOS) indicator(s) or in-synch (IS) indicator(s).

Meanwhile, in the present disclosure, for example, an RB may be replaced/substituted with a subcarrier. Also, in the present disclosure, for example, a packet or a traffic may be replaced/substituted with a TB or a MAC PDU based on a transmission layer.

Meanwhile, in the present disclosure, a CBG may be replaced/substituted with a TB.

Meanwhile, in the present disclosure, for example, a source ID may be replaced/substituted with a destination ID.

Meanwhile, in the present disclosure, for example, an L1 ID may be replaced/substituted with an L2 ID. For example, the L1 ID may be an L1 source ID or an L1 destination ID. For example, the L2 ID may be an L2 source ID or an L2 destination ID.

Meanwhile, in the present disclosure, for example, an operation of the transmitting UE to reserve/select/determine retransmission resource(s) may include: an operation of the transmitting UE to reserve/select/determine potential retransmission resource(s) for which actual use will be determined based on SL HARQ feedback information received from the receiving UE.

Meanwhile, in the present disclosure, a sub-selection window may be replaced/substituted with a selection window and/or the pre-configured number of resource sets within the selection window, or vice versa.

Meanwhile, in the present disclosure, SL MODE 1 may refer to a resource allocation method or a communication method in which a base station directly schedules SL transmission resource(s) for a TX UE through pre-defined signaling (e.g., DCI or RRC message). For example, SL MODE 2 may refer to a resource allocation method or a communication method in which a UE independently selects SL transmission resource(s) in a resource pool pre-configured or configured from a base station or a network. For example, a UE performing SL communication based on SL MODE 1 may be referred to as a MODE 1 UE or MODE 1 TX UE, and a UE performing SL communication based on SL MODE 2 may be referred to as a MODE 2 UE or MODE 2 TX UE.

Meanwhile, in the present disclosure, for example, a dynamic grant (DG) may be replaced/substituted with a configured grant (CG) and/or a semi-persistent scheduling (SPS) grant, or vice versa. For example, the DG may be replaced/substituted with a combination of the CG and the SPS grant, or vice versa. For example, the CG may include at least one of a configured grant (CG) type 1 and/or a configured grant (CG) type 2. For example, in the CG type 1, a grant may be provided by RRC signaling and may be stored as a configured grant. For example, in the CG type 2, a grant may be provided by a PDCCH, and may be stored or deleted as a configured grant based on L1 signaling indicating activation or deactivation of the grant.

Meanwhile, in the present disclosure, a channel may be replaced/substituted with a signal, or vice versa. For example, transmission/reception of a channel may include transmission/reception of a signal. For example, transmission/reception of a signal may include transmission/reception of a channel. In addition, for example, cast may be replaced/substituted with at least one of unicast, groupcast, and/or broadcast, or vice versa. For example, a cast type may be replaced/substituted with at least one of unicast, groupcast, and/or broadcast, or vice versa.

Meanwhile, in the present disclosure, a resource may be replaced/substituted with a slot or a symbol, or vice versa. For example, the resource may include a slot and/or a symbol.

Meanwhile, in the present disclosure, a priority may be replaced/substituted with at least one of logical channel prioritization (LCP), latency, reliability, minimum required communication range, prose per-packet priority (PPPP), sidelink radio bearer (SLRB), QoS profile, QoS parameter and/or requirement, or vice versa.

Meanwhile, in various embodiments of the present disclosure, the reservation resource and/or the selection resource may be replaced/substituted with a sidelink grant (SL GRANT).

Meanwhile, in various embodiments of the present disclosure, latency may be replaced/substituted with a packet delay budget (PDB).

Meanwhile, in various embodiments of the present disclosure, a message for triggering a report on sidelink channel state information/sidelink channel quality information (hereinafter, SL_CSI information) may be replaced/substituted with a sidelink channel state information reference signal (CSI-RS) reception.

Meanwhile, in the present disclosure, blind retransmission may refer that the TX UE performs retransmission without receiving SL HARQ feedback information from the RX UE. For example, SL HARQ feedback-based retransmission may refer that the TX UE determines whether to perform retransmission based on SL HARQ feedback information received from the RX UE. For example, if the TX UE receives NACK and/or DTX information from the RX UE, the TX UE may perform retransmission to the RX UE.

Meanwhile, in the present disclosure, for example, for convenience of description, a (physical) channel used when a RX UE transmits at least one of the following information to a TX UE may be referred to as a PSFCH.
- SL HARQ feedback, SL CSI, SL (L1) RSRP

Meanwhile, in the present disclosure, a Uu channel may include a UL channel and/or a DL channel. For example, the UL channel may include a PUSCH, a PUCCH, a sounding reference Signal (SRS), etc. For example, the DL channel may include a PDCCH, a PDSCH, a PSS/SSS, etc. For example, a SL channel may include a PSCCH, a PSSCH, a PSFCH, a PSBCH, a PSSS/SSSS, etc.

Meanwhile, in the present disclosure, sidelink information may include at least one of a sidelink message, a sidelink packet, a sidelink service, sidelink data, sidelink control information, and/or a sidelink transport block (TB). For example, sidelink information may be transmitted through a PSSCH and/or a PSCCH.

Meanwhile, in NR V2X communication or NR sidelink communication, a transmitting UE may reserve/select one or more transmission resources for sidelink transmission (e.g., initial transmission and/or retransmission), and the transmitting UE may transmit information on the location of the one or more transmission resources to receiving UE(s).

Meanwhile, when performing sidelink communication, a method for a transmitting UE to reserve or pre-determine transmission resource(s) for receiving UE(s) may be representatively as follows.

For example, the transmitting UE may perform a reservation of transmission resource(s) based on a chain. Specifically, for example, if the transmitting UE reserves K transmission resources, the transmitting UE may transmit location information for less than K transmission resources to receiving UE(s) through a SCI transmitted to the receiving UE(s) at any (or specific) transmission time or a time resource. That is, for example, the SCI may include location information for less than the K transmission resources. Alternatively, for example, if the transmitting UE reserves K transmission resources related to a specific TB, the transmitting UE may transmit location information for less than K transmission resources to receiving UE(s) through a SCI transmitted to the receiving UE(s) at any (or specific) transmission time or a time resource. That is, the SCI may include location information for less than the K transmission resources. In this case, for example, it is possible to prevent performance degradation due to an excessive increase in payloads of the SCI, by signaling only the location information for less than K transmission resources to the receiving UE(s) through one SCI transmitted at any (or specific) transmission time or the time resource by the transmitting UE.

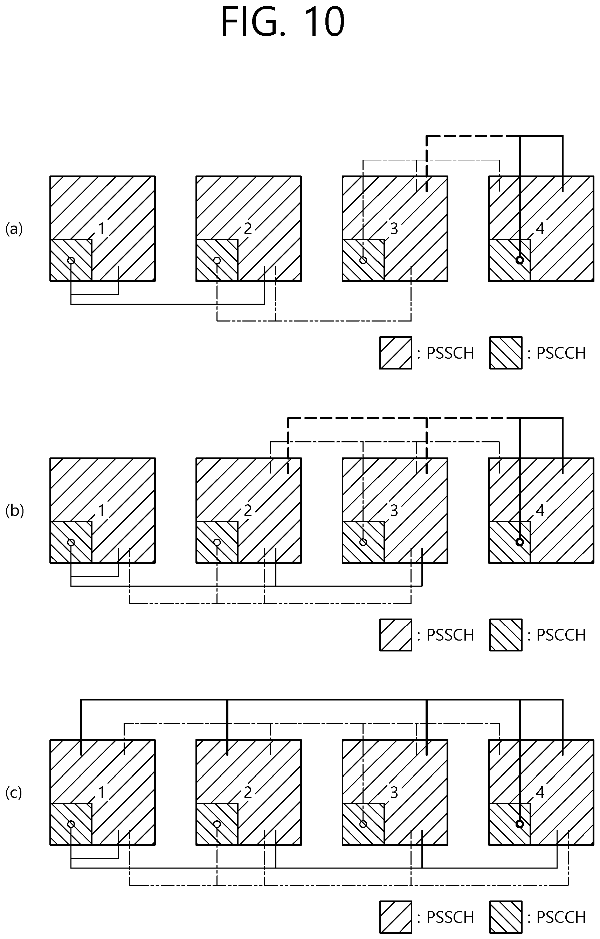

FIG. 10 shows a method in which a UE that has reserved transmission resource(s) informs another UE of the transmission resource(s), based on an embodiment of the present disclosure. The embodiment of FIG. 10 may be combined with various embodiments of the present disclosure.

Specifically, for example, (a) of FIG. 10 shows a method for performing by a transmitting UE chain-based resource reservation by transmitting/signaling location information of (maximum) 2 transmission resources to receiving UE(s) through one SCI, in the case of a value of K = 4. For example, (b) of FIG. 10 shows a method for performing by a transmitting UE chain-based resource reservation by transmitting/signaling location information of (maximum) 3 transmission resources to receiving UE(s) through one SCI, in the case of a value of K = 4. For example, referring to (a) and (b) of FIG. 10, the transmitting UE may transmit/signal only location information of the fourth transmission-related resource to the receiving UE(s) through the fourth (or last) transmission-related PSCCH. For example, referring to (a) of FIG. 10, the transmitting UE may transmit/signal to the receiving UE(s) not only location information of the fourth transmission-related resource but also location information of the third transmission-related resource additionally through the fourth (or last) transmission-related PSCCH. For example, referring to (b) of FIG. 10, the transmitting UE may transmit/signal to the receiving UE(s) not only location information of the fourth transmission-related resource but also location information of the second transmission-related resource and location information of the third transmission-related resource additionally through the fourth (or last) transmission-related PSCCH. In this case, for example, in (a) and (b) of FIG. 10, if the transmitting UE may transmit/signal to the receiving UE(s) only location information of the fourth transmission-related resource through the fourth (or last) transmission-related PSCCH, the transmitting UE may set or designate a field/bit of location information of unused or remaining transmission resource(s) to a pre-configured value (e.g., 0). For example, in (a) and (b) of FIG. 10, if the transmitting UE may transmit/signal to the receiving UE(s) only location information of the fourth transmission-related resource through the fourth (or last) transmission-related PSCCH, the transmitting UE may be set or designate a field/bit of location information of unused or remaining transmission resource(s) to a pre-configured status/bit value indicating/representing the last transmission (among 4 transmissions).

Meanwhile, for example, the transmitting UE may perform a reservation of transmission resource(s) based on a block. Specifically, for example, if the transmitting UE reserves K transmission resources, the transmitting UE may transmit location information for K transmission resources to receiving UE(s) through a SCI transmitted to the receiving UE(s) at any (or specific) transmission time or a time resource. That is, the SCI may include location information for K transmission resources. For example, if the transmitting UE reserves K transmission resources related to a specific TB, the transmitting UE may transmit location information for K transmission resources to receiving UE(s) through a SCI transmitted to the receiving UE(s) at any (or specific) transmission time or a time resource. That is, the SCI may include location information for K transmission resources. For example, (c) of FIG. 10 shows a method for performing by the transmitting UE block-based resource reservation, by signaling location information of 4 transmission resources to receiving UE(s) through one SCI, in the case of a value of K = 4.

Based on an embodiment of the present disclosure, in the case of the transmitting UE performing the SL mode 2 operation, when the transmitting UE selects/reserves a transmission resource within N slots, the transmitting UE may divide a selection window which is determined based on a remaining latency budget related to a packet, into a pre-configured number. Herein, for example, the pre-configured number may be a value obtained by dividing the N value by the maximum number of time resources that can be signaled by one SCI. Or, for example, when the transmitting UE selects/reserves a transmission resource within N slots, the transmitting UE may divide a selection window which is determined based on a remaining latency budget related to a packet into a pre-configured length unit (e.g., the maximum time gap between transmission resources that can be signaled with one SCI) (hereinafter, K_VAL). Then, for example, the transmitting UE select "CEILING (N/K_VAL) (and/or FLOOR (N/K_VAL))" transmission resources, within a 32-slot window (e.g., this may be interpreted as the maximum time gap between transmission resources that can be signaled by one SCI), per divided selection window. Herein, for example, when the above-described embodiment is applied, it may be interpreted that the condition requiring the selected/reserved transmission resources within different divided selection windows to be located within the 32-slot window does not need to be satisfied. Additionally, for example, based on the above-described embodiment, the operation of selecting a transmission resource within a selection window related to a remaining latency budget of a packet may be triggered multiple number of times. For example, based on the above-described embodiment, the operation of selecting a transmission resource within a selection window related to a remaining latency budget of a packet may be triggered pre-configured number of times specifically for at least one of a resource pool, a service type, a QoS requirement (e.g., latency, reliability) or a resource pool congestion level.

Based on an embodiment of the present disclosure, among subchannels included in a resource pool, there may be exist a subchannel having a different frequency size (hereinafter, UNNOR_SB) as compared to other subchannels. Herein, for example, when a transmission resource is configured/selected within N slots, a related TB size may be determined based on the frequency size of a transmission resource of a pre-configured order signaled by SCI. For example, the pre-configured order may be the first or the last. Herein, for example, all of the transmission resources within N slots may be selected with the same number of subchannels. Additionally, for example, the sum of the number of RBs related to K subchannels included in a resource pool (hereinafter, POOL_RBNUM) may be smaller than the number of RBs included in a SL BWP (hereinafter, SYS_RBNUM). In this case, whether to regard the RBs of "SYS_RBNUM - POOL_RBNUM" as an independent subchannel, or whether to include the RBs of "SYS_RBNUM - POOL_RBNUM" as one of the existing K subchannels according to a pre-defined rule may be determined based on whether or not a "SYS_RBNUM - POOL_RBNUM" value exceeds a pre-configured threshold value and/or whether a "SYS_RBNUM - POOL_RBNUM" value is greater than or equal to the pre-configured number of PSCCH RBs. Herein, for example, if the "SYS_RBNUM - POOL_RBNUM" value is greater than the pre-configured threshold value, the RBs may be regarded as a single independent subchannel which is configured with "SYS_RBNUM - POOL_RBNUM" RBs. For example, if the "SYS_RBNUM - POOL_RBNUM" value is less than the pre-configured threshold value, the RBs may be included as one of the existing K subchannels (e.g., the frequency size of a subchannel additionally including the "SYS_RBNUM - POOL_RBNUM" RBs becomes larger than other subchannels). Or, for example, if the "SYS_RBNUM - POOL_RBNUM" value is greater than or equal to the pre-configured number of PSCCH RBs, the RBs may be regarded as a single independent subchannel which is configured with "SYS_RBNUM - POOL_RBNUM" RBs. For example, if the "SYS_RBNUM - POOL_RBNUM" value is less than the pre-configured number of PSCCH RBs, the RBs may be included as one of the existing K subchannels.

Based on an embodiment of the present disclosure, if a transmission resource reservation period is relatively short or shorter than a pre-configured threshold value, a transmission resource related to a specific or previous period may be allowed to be located within another or next period. For example, the transmission resource may include a retransmission resource. Herein, for example, if the above embodiment is applied, and if transmission resources related to different periods overlap in a time domain and/or a frequency domain, the UE may determine which transmission resource of which period to drop based on UE implementation. Or, for example, if transmission resources related to different periods overlap in a time domain and/or a frequency domain, the UE may determine which transmission resource of which period to drop based on a priority of a transmission packet, and the UE may drop a (period) resource related to a packet transmission with a (relatively) low priority. Or, for example, if transmission resources related to different periods overlap in a time domain and/or a frequency domain, the UE may drop a (re-)transmission resource related to a preceding period in the time domain. Or, for example, if transmission resources related to different periods overlap in a time domain and/or a frequency domain, the UE may drop a (re-)transmission resource related to a following period in the time domain. Additionally, for example, among the transmission resources related to different periods that overlap in the time domain and/or the frequency domain, if an unused transmission resource occurs due to the reception of ACK information through a PSFCH, packet transmission may be allowed through another overlapping transmission resource. For example, among the transmission resources related to different periods that overlap in the time domain and/or the frequency domain, if an unused transmission resource related to a packet with a relatively high priority occurs due to the reception of ACK information through a PSFCH, the UE may transmit the related packet through another overlapping transmission resource related to a packet with a relatively low priority. Or, for example, it may be configured such that a transmission resource related to a specific or previous period is not allowed to be located within another or next period. Or, for example, if a transmission resource related to a specific or previous period is located within another or next period, the UE may use the corresponding transmission resource for transmission of a new packet related to another or next period. Additionally, for example, when CR evaluation is performed for FDM transmission resources related to different periods overlapped in a time domain and/or a frequency domain, the UE may reflect the counted number of subchannels in the CR evaluation regardless of the overlapping. Or, in this case, for example, the UE reflect the number of subchannels in which the overlapping subchannels are counted only once in the CR evaluation. Or, in this case, for example, the UE may reflect the counted number of subchannels in the CR evaluation except for the subchannels related to the dropped transmission resource. Or, in this case, for example, the UE may include the subchannel related to the dropped transmission resource and reflect the counted number of subchannels in the CR evaluation.

Based on an embodiment of the present disclosure, a position of a PSSCH DMRS symbol and/or a SL CSI-RS mapping symbol may be determined by applying a pre-configured offset of an inverse direction based on a data symbol of a pre-configured order of a PSSCH. For example, the pre-configured order may be last. For example, the UE may transmit the PSSCH DMRS symbol and/or the SL CSI-RS mapping symbol in the location to which the pre-configured offset of the inverse direction is applied based on the data symbol of the pre-configured order of the PSSCH. Or, for example, candidate patterns of PSSCH DMRS symbols and/or SL CSI-RS mapping symbols may exist specifically for a resource pool. In this case, based on the number of symbols that can be actually used for PSSCH transmission by the UE, candidate patterns of PSSCH DMRS symbols and/or SL CSI-RS mapping symbols that can be selected finally may be limited. For example, based on the overhead of PSFCH resources, etc., depending on the number of symbols that can be actually used for PSSCH transmission by the UE, candidate patterns of PSSCH DMRS symbols and/or SL CSI-RS mapping symbols that can be selected finally may be implicitly limited.

Based on an embodiment of the present disclosure, in the case of the UE performing the re-evaluation operation, based on a transmission resource that has triggered re-selected/that has been re-selected (hereinafter, RSC_REV) due to an overlap of transmission resources of another UE, a transmission resource prior to being signaled by SCI, wherein a pre-determined/pre-configured time relation/restriction cannot be maintained, may be configured such that re-selection is triggered/performed together. For example, in the case of the UE performing the re-evaluation operation, due to RSC_REV, the UE-internally determined transmission resource prior to being signaled by the SCI (located after the RSC_REV time), wherein the pre-determined/pre-configured time relation/restriction cannot be maintained (e.g., the transmission resource in which the resource re-selection is not directly triggered by the re-evaluation operation) and/or the transmission resource that is signaled by SCI may be configured such that re-selection is triggered/performed together. For example, when the UE performs the re-evaluation operation, the UE may reselect a transmission resource before being signaled by SCI, in which the pre-determined/pre-configured time range is not maintained due to RSC_REV, together with RSC_REV. For example, if there is no selectable candidate transmission resource, wherein a pre-determined/pre-configured time relation/restriction can be maintained, re-selection for all transmission resources of the related SL grant may be triggered. Or, for example, in the case of the UE performing the re-evaluation operation, reselection for a determined transmission resource prior to being signaled by SCI that is located after the above-described RSC_REV and/or a transmission resource that is signaled by SCI may be triggered/performed. For example, the determined transmission resource prior to being signaled by the SCI may be a UE-internally determined transmission resource. Or, for example, in the case of the UE performing a periodic resource reservation, a resource related to a period that has already been signaled by SCI may be configured to be excluded from a re-evaluation based resource re-selection target. For example, in the case of the UE performing a periodic resource reservation, a resource related to a subsequent period that has already been signaled by SCI is configured to be excluded from a re-evaluation based resource re-selection target. For example, resource reselection based on re-evaluation may be performed for resources within the same period. For example, in the case of the UE reserving periodic resources, if a resource related to a period that has already been signaled by SCI needs to be reselected based on re-evaluation, all transmission resources of the related SL grant may be reselected. For example, in the case of the UE reserving periodic resources, if a resource related to a subsequent period that has already been signaled by SCI needs to be reselected based on re-evaluation, the UE may reselect all transmission resources of the SL grant related to RSC_REV.

Based on an embodiment of the present disclosure, if a transmission resource at a specific time needs to be reselected due to the pre-emption operation, all transmission resources of other times that have been signaled/scheduled by SCI transmission of the corresponding time may be configured to be reselected. For example, if the UE needs to reselect a transmission resource already signaled by SCI at a specific time due to the pre-emption operation, the UE may also reselect all transmission resources of other time that are signaled/scheduled by SCI transmission of the corresponding time. Or, for example, if a transmission resource at a specific time needs to be reselected due to the pre-emption operation, transmission resources at other time that have been signaled/scheduled by SCI transmission of the corresponding time may be configured to be excluded from reselection. For example, if the UE needs to reselect a transmission resource already signaled by SCI at a specific time due to the pre-emption operation, the UE may not reselect transmission resources of other times that are signaled/scheduled by SCI transmission of the corresponding time.

Meanwhile, in sidelink communication, when the UE performs re-evaluation, the UE may compare a threshold value and an RSRP value related to a sidelink resource to be re-evaluated. For example, if the RSRP value related to the sidelink resource is greater than the threshold value, the UE may exclude the sidelink resource from candidate resources. Herein, for example, the threshold value may be a value pre-configured by a combination of a priority related to the transmitting UE and/or a priority related to the receiving UE. Then, for example, the physical layer of the UE may report the re-evaluation of the sidelink resource to the MAC layer of the UE.

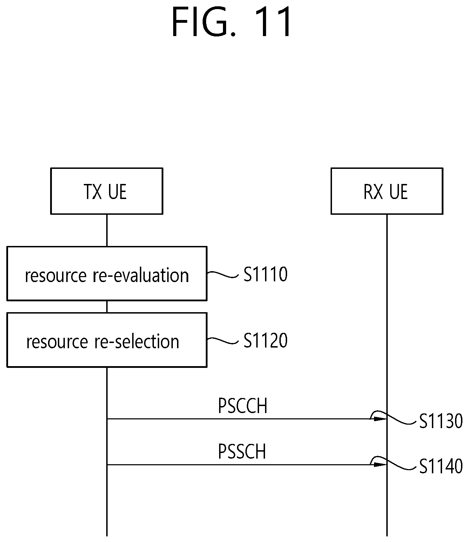

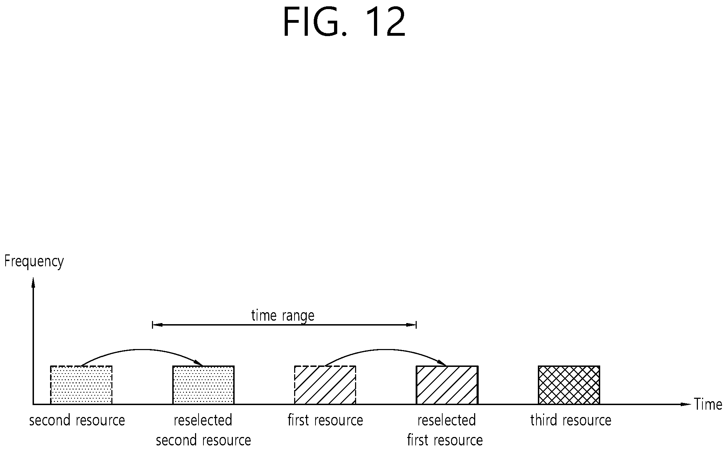

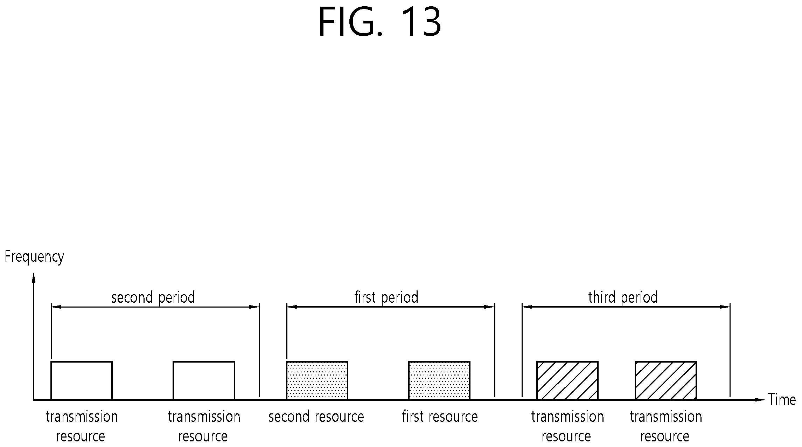

FIG. 11 shows a procedure in which a transmitting UE reselects a resource based on re-evaluation of the resource and performs sidelink communication with a receiving UE, based on an embodiment of the present disclosure. FIG. 12 shows an example of reselecting a resource based on a re-evaluated resource, based on an embodiment of the present disclosure. FIG. 13 shows an example of re-selecting a periodic resource based on a re-evaluated periodic resource, based on an embodiment of the present disclosure. The embodiments of FIG. 11 to FIG. 13 may be combined with various embodiments of the present disclosure.

Referring to FIG. 11, in step S1110, the transmitting UE may perform resource re-evaluation for a transmission resource for performing sidelink communication. For example, the transmission resource may be a first transmission resource.

In step S1120, the transmitting UE may reselect the transmission resource based on the re-evaluation. For example, the transmitting UE may reselect the first transmission resource based on the re-evaluation. For example, the transmitting UE may reselect a second transmission resource based on the reselection of the first transmission resource. For example, the second transmission resource may be a resource selected by the transmitting UE before the first transmission resource is reselected. For example, the second transmission resource may be a resource not reserved by the transmitting UE. For example, the resource not reserved by the transmitting UE may be a resource before SCI including information related to the reservation of the transmission resource is transmitted by the transmitting UE. For example, the second transmission resource may be a resource before the SCI including information related to the reservation of the second transmission resource is transmitted by the transmitting UE.

Specifically, referring to FIG. 12, for example, the second transmission resource may exceed a pre-determined time range by the reselected first transmission resource. For example, the reselected second transmission resource may be located within the pre-determined time range. For example, the pre-determined time range may be a maximum time gap between transmission resources that can be signaled by one SCI. For example, the maximum time gap between transmission resources that can be signaled by one SCI may be 32 slots. For example, a time gap between the reselected first transmission resource and the reselected second transmission resource may be a value within 32 slots. For example, the transmitting UE may reselect a third transmission resource located after the first transmission resource. For example, the third transmission resource may be a resource before the SCI including information related to the reservation of the third transmission resource is transmitted by the transmitting UE. For example, if the third transmission resource is a resource in which SCI including information related to the reservation of the third transmission resource is transmitted by the transmitting UE, the transmitting UE may exclude the third transmission resource from the re-evaluation based resource reselection target.

For example, based on no candidate transmission resource within the pre-determined time range, all transmission resources allocated by a sidelink grant related to the first transmission resource may be reselected.

For example, based on transmission resources being periodically reserved by the transmitting UE, a transmission resource related to a second period following a first period may not be reselected. For example, the first period may be a period including the first transmission resource. The following second period may include a resource in which SCI including information related to the reservation of the transmission resource is transmitted by the transmitting UE.

Alternatively, for example, based on transmission resources being periodically reserved by the transmitting UE, a transmission resource in the second period following the first period may be reselected. For example, the first period may include the first transmission resource. For example, the following second period may include a resource in which SCI including information related to the reservation of the transmission resource is transmitted by the transmitting UE. In this case, for example, all transmission resources allocated by a sidelink grant related to the first transmission resource may be reselected.

Referring to FIG. 13, if the transmitting UE performs re-evaluation for a first transmission resource and re-selection of the first transmission resource is triggered, the transmitting UE may reselect a second transmission resource within a first period. For example, if the transmitting UE performs re-evaluation for the first transmission resource and reselection of the first transmission resource is triggered, the transmitting UE may not reselect a transmission resource within a period other than the first period. For example, if SCI including information related to the reservation of the transmission resource included in a second period is already signaled, the transmitting UE may exclude a transmission resource included in the second period from the re-evaluation based resource reselection target. Or, for example, if the transmitting UE needs to reselect a transmission resource within a period other than the first period, the transmitting UE may reselect all transmission resources allocated by a sidelink grant related to the first transmission.

In step S1130, the transmitting UE may transmit a PSCCH to the receiving UE based on the reselected resource. For example, the transmitting UE may transmit SCI to the receiving UE through the PSCCH. For example, the SCI may include information related to the reservation of the transmission resource. In step S1140, the transmitting UE may transmit a PSSCH related to the PSCCH to the receiving UE based on the reselected resource.

Additionally, for example, a reselection check procedure for a transmission resource in a resource pool selected for a sidelink process may be triggered for the transmitting UE. In this case, for example, while the transmitting UE performs reselection triggered by re-evaluation indicated by the physical layer, the transmitting UE may reselect the pre-selected but unreserved resource. Also, for example, while reselection triggered by re-evaluation indicated by the physical layer is performed, the operation of reselecting the pre-selected but unreserved resource may be an implementation of the UE.

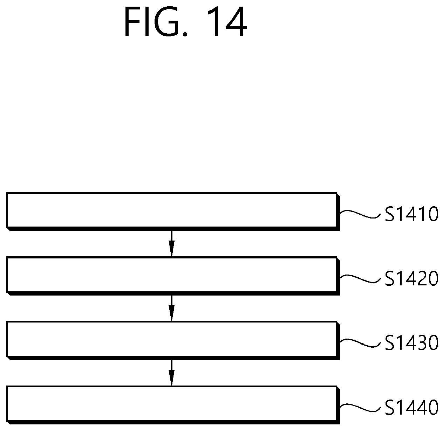

FIG. 14 shows a method for a first device to perform resource reselection based on re-evaluation of a first transmission resource, based on an embodiment of the present disclosure. The embodiment of FIG. 14 may be combined with various embodiments of the present disclosure.

Referring to FIG. 14, in step S1410, the first device 100 may perform re-evaluation for a first transmission resource for performing sidelink communication. In step S1420, the first device 100 may reselect the first transmission resource based on the re-evaluation.

In step S1430, the first device 100 may reselect a second transmission resource based on the reselection of the first transmission resource. For example, the second transmission resource may be a resource selected by the first device 100 before the first transmission resource is reselected. For example, the second transmission resource may be a resource not reserved by the first device 100. For example, the second transmission resource may be a resource before SCI including information related to reservation of the second transmission resource is transmitted by the first device 100. For example, the second transmission resource may exceed a pre-determined time range. For example, the reselected second transmission resource may be located within the pre-determined time range. For example, the pre-determined time range may be the maximum time between transmission resources that can be indicated by one SCI. For example, the maximum time gap between transmission resources that can be indicated by one SCI may be 32 slots. For example, based on no candidate transmission resource within the pre-determined time range, all transmission resources allocated by a sidelink grant related to the first transmission resource may be reselected.

For example, a third transmission resource located after the first transmission resource may be reselected. For example, the third transmission resource may be a resource before SCI including information related to reservation of the third transmission resource is transmitted by the first device 100.

For example, based on a periodic transmission resource reservation by the first device 100, a transmission resource related to a second period following a first period may not be reselected. For example, the first period may include the first transmission resource. For example, the second period may include a resource in which SCI including information related to reservation of a transmission resource is transmitted by the first device 100.

For example, based on a periodic transmission resource reservation by the first device 100, a transmission resource within a second period following a first period may be reselected. For example, the first period may include the first transmission resource. For example, the second period may include a resource in which SCI including information related to reservation of a transmission resource is transmitted by the first device 100. For example, all transmission resources allocated by a sidelink grant related to the first transmission resource may be reselected.

The proposed method may be applied to the device(s) based on various embodiments of the present disclosure. First, the processor 102 of the first device 100 may perform re-evaluation for a first transmission resource for performing sidelink communication. In addition, the processor 102 of the first device 100 may reselect the first transmission resource based on the re-evaluation. In addition, the processor 102 of the first device 100 may reselect a second transmission resource based on the reselection of the first transmission resource.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: perform re-evaluation for a first transmission resource for performing sidelink communication; reselect the first transmission resource based on the re-evaluation; and reselect a second transmission resource based on the reselection of the first transmission resource. For example, the second transmission resource may be a resource selected by the first UE before the first transmission resource is reselected. For example, the second transmission resource may be a resource not reserved by the first UE.

Based on an embodiment of the present disclosure, a non-transitory computer-readable storage medium storing instructions may be provided. For example, the non-transitory computer-readable storage medium storing instructions, when executed, may cause a first device to: perform re-evaluation for a first transmission resource for performing sidelink communication; reselect the first transmission resource based on the re-evaluation; and reselect a second transmission resource based on the reselection of the first transmission resource. For example, the second transmission resource may be a resource selected by the first device before the first transmission resource is reselected. For example, the second transmission resource may be a resource not reserved by the first device.

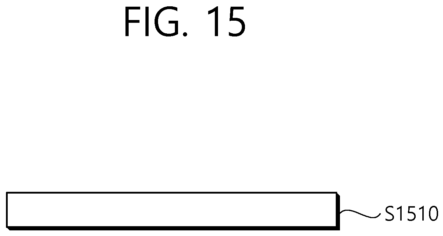

FIG. 15 shows a method for a second device to perform sidelink communication with a first device, based on an embodiment of the present disclosure. The embodiment of FIG. 15 may be combined with various embodiments of the present disclosure.

Referring to FIG. 15, in step S1510, the second device 200 may perform sidelink communication with the first device 100 based on a reselected first transmission resource and a reselected second transmission resource. For example, a first transmission resource may be re-evaluated, and the first transmission resource may be reselected based on the re-evaluation. For example, based on the reselection of the first transmission resource, the second transmission resource may be reselected. For example, the second transmission resource may be a resource selected by the first device before the first transmission resource is reselected, and the second transmission resource may be a resource not reserved by the first device.

For example, the second transmission resource may be a resource before SCI including information related to reservation of the second transmission resource is transmitted by the first device 100. For example, the second transmission resource may exceed a pre-determined time range. For example, the reselected second transmission resource may be located within the pre-determined time range. For example, the pre-determined time range may be the maximum time between transmission resources that can be indicated by one SCI. For example, the maximum time gap between transmission resources that can be indicated by one SCI may be 32 slots. For example, based on no candidate transmission resource within the pre-determined time range, all transmission resources allocated by a sidelink grant related to the first transmission resource may be reselected.

For example, a third transmission resource located after the first transmission resource may be reselected. For example, the third transmission resource may be a resource before SCI including information related to reservation of the third transmission resource is transmitted by the first device 100.

For example, based on a periodic transmission resource reservation by the first device 100, a transmission resource related to a second period following a first period may not be reselected. For example, the first period may include the first transmission resource. For example, the second period may include a resource in which SCI including information related to reservation of a transmission resource is transmitted by the first device 100.

For example, based on a periodic transmission resource reservation by the first device 100, a transmission resource within a second period following a first period may be reselected. For example, the first period may include the first transmission resource. For example, the second period may include a resource in which SCI including information related to reservation of a transmission resource is transmitted by the first device 100. For example, all transmission resources allocated by a sidelink grant related to the first transmission resource may be reselected.

The proposed method may be applied to the device(s) based on various embodiments of the present disclosure. For example, the processor 202 of the second device 200 may control the transceiver 206 to perform sidelink communication with the first device 100 based on the reselected first transmission resource and the reselected second transmission resource.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: perform sidelink communication with the first device based on a reselected first transmission resource and a reselected second transmission resource. For example, a first transmission resource may be re-evaluated, and the first transmission resource may be reselected based on the re-evaluation. For example, based on the reselection of the first transmission resource, the second transmission resource may be reselected. For example, the second transmission resource may be a resource selected by the first device before the first transmission resource is reselected, and the second transmission resource may be a resource not reserved by the first device.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

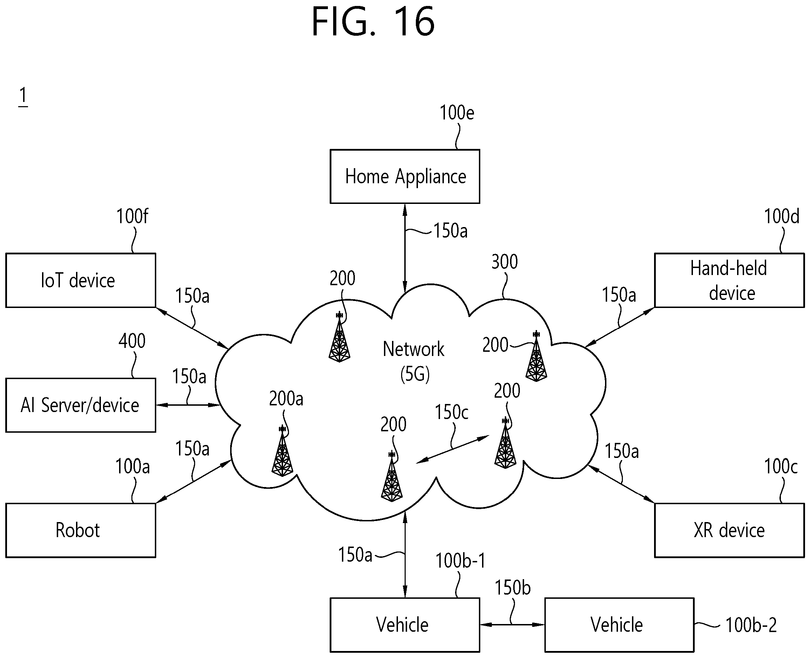

FIG. 16 shows a communication system 1, based on an embodiment of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

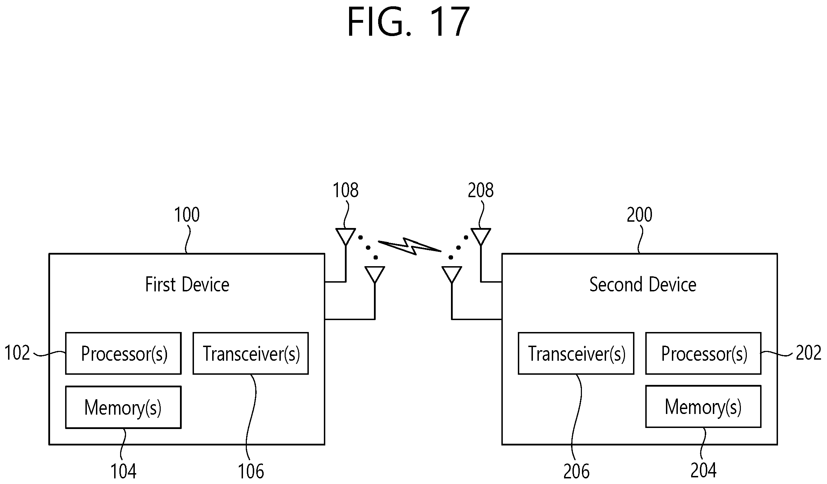

FIG. 17 shows wireless devices, based on an embodiment of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

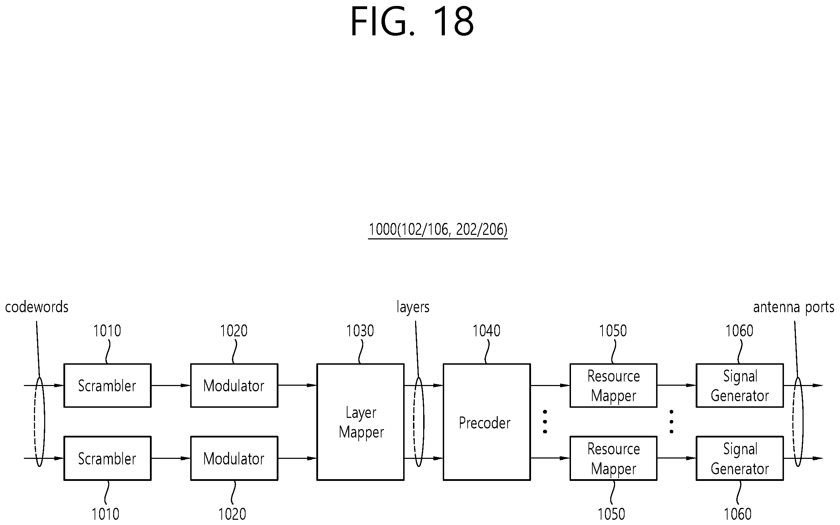

FIG. 18 shows a signal process circuit for a transmission signal, based on an embodiment of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

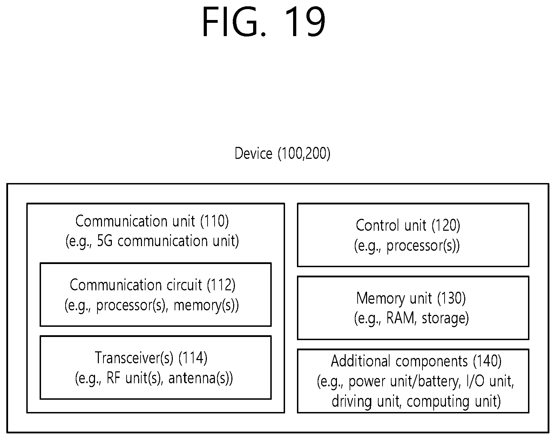

FIG. 19 shows another example of a wireless device, based on an embodiment of the present disclosure. The wireless device may be implemented in various forms according to a use-case/service (refer to FIG. 16).

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

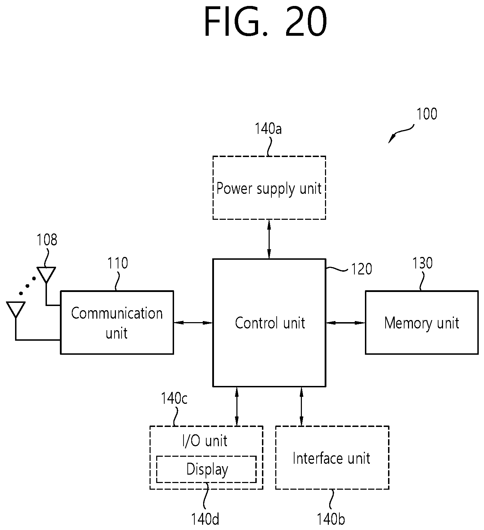

FIG. 20 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

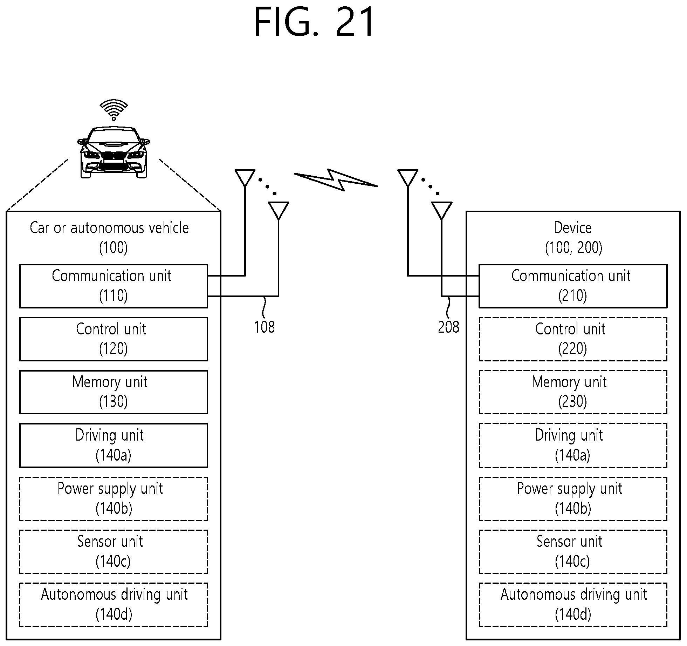

FIG. 21 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
transmitting sidelink control information including resource allocation information and resource reservation period information;
performing (S1410) re-evaluation for a first transmission resource for performing sidelink communication;
reselecting (S1420) the first transmission resource based on the re-evaluation; and
reselecting (S1430) a second transmission resource based on the reselection of the first transmission resource,
wherein the second transmission resource is a resource selected by the first device before the first transmission resource is reselected,
wherein the second transmission resource is a resource not reserved by the first device, and
wherein a third transmission resource in only one subsequent period that has already been signaled by the sidelink control information is not subject to the re-evaluation.

2. The method of claim 1, wherein the second transmission resource is a resource that has not been signaled by the sidelink control information.

3. The method of claim 1, wherein the second transmission resource exceeds a pre-determined time range.

4. The method of claim 3, wherein the reselected second transmission resource is located within the pre-determined time range.

5. The method of claim 4, wherein the pre-determined time range is a maximum time gap between transmission resources that can be signaled by one sidelink control information.

6. The method of claim 5, wherein the maximum time gap between transmission resources that can be signaled by the one sidelink control information is 32 slots.

7. The method of claim 3, wherein, based on that no candidate transmission resource for reselecting the second transmission resource is within the pre-determined time range, all transmission resources allocated by a sidelink grant related to the first transmission resource are reselected.

8. The method of claim 1, wherein the third transmission resource in the only one subsequent period is a periodic transmission resource reserved by the resource allocation information and the resource reservation period information included in the sidelink control information.

9. A first device (100, 200) adapted to perform wireless communication, the first device comprising:
at least one transceiver (114);
at least one processor (112); and
at least one memory (130) connected to the at least one processor (112) and storing instructions that, based on being executed, cause the first device (100, 200) to perform operations comprising:
transmitting sidelink control information including resource allocation information and resource reservation period information;
performing re-evaluation for a first transmission resource for performing sidelink communication;
reselecting the first transmission resource based on the re-evaluation; and
reselecting a second transmission resource based on the reselection of the first transmission resource,
wherein the second transmission resource is a resource selected by the first device before the first transmission resource is reselected,
wherein the second transmission resource is a resource not reserved by the first device, and
wherein a third transmission resource in only one subsequent period that has already been signaled by the sidelink control information is not subject to the re-evaluation.

10. The first device (100, 200) of claim 9, wherein the operations further comprise operations of a method according to any of claims 2 to 8.

11. A non-transitory computer-readable storage medium storing instructions that, based on being executed, cause a first device to perform operations comprising:
transmitting sidelink control information including resource allocation information and resource reservation period information;
performing re-evaluation for a first transmission resource for performing sidelink communication;
reselecting the first transmission resource based on the re-evaluation; and
reselecting a second transmission resource based on the reselection of the first transmission resource,
wherein the second transmission resource is a resource selected by the first device before the first transmission resource is reselected,
wherein the second transmission resource is a resource not reserved by the first device, and
wherein a third transmission resource in only one subsequent period that has already been signaled by the sidelink control information is not subject to the re-evaluation.

12. The non-transitory computer-readable storage medium of claim 11, wherein the operations further comprise operations of a method according to any of claims 2 to 8.

## Patentansprüche

1. Verfahren zum Durchführen einer drahtlosen Kommunikation durch eine erste Vorrichtung, wobei das Verfahren umfasst:
Übertragen von Sidelink-Steuerinformationen, die Ressourcen-Zuweisungsinformationen und Ressourcen-Reservierungsperiode-Informationen enthalten;
Durchführen (S1410) einer Neubewertung für eine erste Übertragungsressource zum Durchführen einer Sidelink-Kommunikation;
erneutes Auswählen (S1420) der ersten Übertragungsressource basierend auf der Neubewertung; und
erneutes Auswählen (S1430) einer zweiten Übertragungsressource basierend auf der erneuten Auswahl der ersten Übertragungsressource,
wobei die zweite Übertragungsressource eine Ressource ist, die von der ersten Vorrichtung ausgewählt wird, bevor die erste Übertragungsressource erneut ausgewählt wird,
wobei die zweite Übertragungsressource eine Ressource ist, die nicht von der ersten Vorrichtung reserviert ist, und
wobei eine dritte Übertragungsressource in nur einer nachfolgenden Periode, die bereits durch die Sidelink-Steuerinformationen signalisiert wurde, nicht der Neubewertung unterliegt.

2. Verfahren nach Anspruch 1, wobei die zweite Übertragungsressource eine Ressource ist, die nicht durch die Sidelink-Steuerinformationen signalisiert wurde.

3. Verfahren nach Anspruch 1, wobei die zweite Übertragungsressource einen vorbestimmten Zeitbereich überschreitet.

4. Verfahren nach Anspruch 3, wobei sich die erneut ausgewählte zweite Übertragungsressource innerhalb des vorbestimmten Zeitbereichs befindet.

5. Verfahren nach Anspruch 4, wobei der vorbestimmte Zeitbereich eine maximale Zeitspanne zwischen Übertragungsressourcen ist, die durch eine Sidelink-Steuerinformation signalisiert werden kann.

6. Verfahren nach Anspruch 5, wobei die maximale Zeitspanne zwischen Übertragungsressourcen, die durch die eine Sidelink-Steuerinformation signalisiert werden kann, 32 Slots beträgt.

7. Verfahren nach Anspruch 3, wobei, basierend darauf, dass keine Kandidaten-Übertragungsressource zum erneuten Auswählen der zweiten Übertragungsressource innerhalb des vorbestimmten Zeitbereichs liegt, alle Übertragungsressourcen, die durch eine Sidelink-Genehmigung in Bezug auf die erste Übertragungsressource zugewiesen wurden, erneut ausgewählt werden.

8. Verfahren nach Anspruch 1, wobei die dritte Übertragungsressource in der einzigen nachfolgenden Periode eine periodische Übertragungsressource ist, die durch die Ressourcen-Zuweisungsinformationen und die Ressourcen-Reservierungsperiode-Informationen reserviert ist, die in den Sidelink-Steuerinformationen enthalten sind.

9. Erste Vorrichtung (100, 200), die angepasst ist, um eine drahtlose Kommunikation durchzuführen, wobei die erste Vorrichtung umfasst:
mindestens einen Transceiver (114);
mindestens einen Prozessor (112); und
mindestens einen Speicher (130), der mit dem mindestens einen Prozessor (112) verbunden ist und Anweisungen speichert, die, basierend auf ihrer Ausführung, bewirken, dass die erste Vorrichtung (100, 200) Operationen durchführt, die umfassen:
Übertragen von Sidelink-Steuerinformationen, die Ressourcen-Zuweisungsinformationen und Ressourcen-Reservierungsperiode-Informationen enthalten;
Durchführen einer Neubewertung für eine erste Übertragungsressource zum Durchführen einer Sidelink-Kommunikation;
erneutes Auswählen der ersten Übertragungsressource basierend auf der Neubewertung; und
erneutes Auswählen einer zweiten Übertragungsressource basierend auf der erneuten Auswahl der ersten Übertragungsressource,
wobei die zweite Übertragungsressource eine Ressource ist, die von der ersten Vorrichtung ausgewählt wird, bevor die erste Übertragungsressource erneut ausgewählt wird,
wobei die zweite Übertragungsressource eine Ressource ist, die nicht von der ersten Vorrichtung reserviert ist, und
wobei eine dritte Übertragungsressource in nur einer nachfolgenden Periode, die bereits durch die Sidelink-Steuerinformationen signalisiert wurde, nicht der Neubewertung unterliegt.

10. Erste Vorrichtung (100, 200) nach Anspruch 9, wobei die Operationen ferner Operationen eines Verfahrens nach einem der Ansprüche 2 bis 8 umfassen.

11. Nichtflüchtiges computerlesbares Speichermedium, das Anweisungen speichert, die, basierend auf ihrer Ausführung, bewirken, dass eine erste Vorrichtung Operationen durchführt, die umfassen:
Übertragen von Sidelink-Steuerinformationen, die Ressourcen-Zuweisungsinformationen und Ressourcen-Reservierungsperiode-Informationen enthalten;
Durchführen einer Neubewertung für eine erste Übertragungsressource zum Durchführen einer Sidelink-Kommunikation;
erneutes Auswählen der ersten Übertragungsressource basierend auf der Neubewertung; und
erneutes Auswählen einer zweiten Übertragungsressource basierend auf der erneuten Auswahl der ersten Übertragungsressource,
wobei die zweite Übertragungsressource eine Ressource ist, die von der ersten Vorrichtung ausgewählt wird, bevor die erste Übertragungsressource erneut ausgewählt wird,
wobei die zweite Übertragungsressource eine Ressource ist, die nicht von der ersten Vorrichtung reserviert ist, und
wobei eine dritte Übertragungsressource in nur einer nachfolgenden Periode, die bereits durch die Sidelink-Steuerinformationen signalisiert wurde, nicht der Neubewertung unterliegt.

12. Nichtflüchtiges computerlesbares Speichermedium nach Anspruch 11, wobei die Operationen ferner Operationen eines Verfahrens nach einem der Ansprüche 2 bis 8 umfassen.

## Revendications

1. Procédé pour la réalisation d'une communication sans fil par un premier dispositif, le procédé comprenant :
l'émission d'une information de commande de liaison latérale comportant une information d'allocation de ressources et une information de période de réservation de ressources ;
la réalisation (S1410) d'une réévaluation pour une première ressource d'émission pour la réalisation d'une communication de liaison latérale ;
la resélection (S1420) de la première ressource d'émission sur la base de la réévaluation ; et
la resélection (S1430) d'une deuxième ressource d'émission sur base de la resélection de la première ressource d'émission,
dans lequel la deuxième ressource d'émission est une ressource sélectionnée par le premier dispositif avant que la première ressource d'émission soit resélectionnée,
dans lequel la deuxième ressource d'émission est une ressource non réservée par le premier dispositif, et
dans lequel une troisième ressource d'émission dans une seule période ultérieure qui a déjà été signalée par l'information de commande de liaison latérale n'est pas soumise à la réévaluation.

2. Procédé selon la revendication 1, dans lequel la deuxième ressource d'émission est une ressource qui n'a pas été signalée par l'information de commande de liaison latérale.

3. Procédé selon la revendication 1, dans lequel la deuxième ressource d'émission dépasse une plage temporelle prédéterminée.

4. Procédé selon la revendication 3, dans lequel la deuxième ressource d'émission resélectionnée est située au sein de la plage temporelle prédéterminée.

5. Procédé selon la revendication 4, dans lequel la plage temporelle prédéterminée est un écart temporel maximal entre des ressources d'émission qui peuvent être signalées par une information de commande de liaison latérale.

6. Procédé selon la revendication 5, dans lequel l'écart temporel maximal entre des ressources d'émission qui peuvent être signalées par l'une information de commande de liaison latérale unique est de 32 créneaux.

7. Procédé selon la revendication 3, dans lequel, sur la base du fait qu'aucune ressource d'émission candidate pour la resélection de la deuxième ressource d'émission n'est au sein de la plage temporelle prédéterminée, toutes les ressources d'émission allouées par une autorisation de liaison latérale relative à la première ressource d'émission sont resélectionnées.

8. Procédé selon la revendication 1, dans lequel la troisième ressource d'émission dans la seule période ultérieure est une ressource d'émission périodique réservée par l'information d'allocation de ressources et l'information de période de réservation de ressources comprises dans l'information de commande de liaison latérale.

9. Premier dispositif (100, 200) adapté pour réaliser une communication sans fil, le premier dispositif comprenant :
au moins un émetteur-récepteur (114) ;
au moins un processeur (112) ; et
au moins une mémoire (130) connectée à l'au moins un processeur (112) et stockant des instructions qui, sur la base de leur exécution, amènent le premier dispositif (100, 200) à réaliser des opérations comprenant :
l'émission d'une information de commande de liaison latérale comportant une information d'allocation de ressources et une information de période de réservation de ressources ;
la réalisation d'une réévaluation pour une première ressource d'émission pour la réalisation d'une communication de liaison latérale ;
la resélection de la première ressource d'émission sur la base de la réévaluation ; et
la resélection d'une deuxième ressource d'émission sur base de la resélection de la première ressource d'émission,
dans lequel la deuxième ressource d'émission est une ressource sélectionnée par le premier dispositif avant que la première ressource d'émission soit resélectionnée,
dans lequel la deuxième ressource d'émission est une ressource non réservée par le premier dispositif, et
dans lequel une troisième ressource d'émission dans une seule période ultérieure qui a déjà été signalée par l'information de commande de liaison latérale n'est pas soumise à la réévaluation.

10. Premier dispositif (100, 200) selon la revendication 9, dans lequel les opérations comprennent en outre des opérations d'un procédé selon l'une quelconque des revendications 2 à 8.

11. Support de stockage non transitoire lisible par ordinateur stockant des instructions qui, sur la base de leur exécution, amènent un premier dispositif à réaliser des opérations comprenant :
l'émission d'une information de commande de liaison latérale comportant une information d'allocation de ressources et une information de période de réservation de ressources ;
la réalisation d'une réévaluation pour une première ressource d'émission pour la réalisation d'une communication de liaison latérale ;
la resélection de la première ressource d'émission sur la base de la réévaluation ; et
la resélection d'une deuxième ressource d'émission sur base de la resélection de la première ressource d'émission,
dans lequel la deuxième ressource d'émission est une ressource sélectionnée par le premier dispositif avant que la première ressource d'émission soit resélectionnée,
dans lequel la deuxième ressource d'émission est une ressource non réservée par le premier dispositif, et
dans lequel une troisième ressource d'émission dans une seule période ultérieure qui a déjà été signalée par l'information de commande de liaison latérale n'est pas soumise à la réévaluation.

12. Support de stockage non transitoire lisible par ordinateur selon la revendication 11, dans lequel les opérations comprennent en outre des opérations d'un procédé selon l'une quelconque des revendications 2 à 8.
